# EUROPEAN PATENT APPLICATION

(11) **EP 1 494 404 A2**
(43) Date of publication of application: **05.01.2005**
(21) Application number: 04015246.4
(22) Date of filing: 29.06.2004
(51) Int. Cl.: H04L 12/56

(54) **Bluetooth module and method for correcting real-time data**

(30) Priority: 02.07.2003 JP 2003190559
(71) Applicant: Alps Electric Co., Ltd., Tokyo 145-8501 (JP)
(72) Inventor: Yamaguchi, Masaya, Tokyo 145-8501 (JP)
(74) Representative: Klunker . Schmitt-Nilson . Hirsch

(57) **Abstract**

Upon receiving packets of audio data from a synchronous connection-oriented link, a signal correcting unit circuit detects a failed packet that is contained in the received packets while storing the received packet data in a memory that is provided in the signal correcting unit circuit, a baseband IC, or the synchronous connection-oriented link. The signal correcting unit circuit determines the correlation between the data in the packets received before and after the failed packet and the data in two of the packets received before the failed packet with one packet therebetween to obtain two-packet data having a similarity to the data in the packets received before and after the failed packet, and interpolates the packet data between the obtained two-packet data in place of the data in the failed packet. The signal correcting unit circuit outputs the audio data including such interpolation to a codec IC.

## Description

### BACKGROUND OF THE INVENTION

### 1. Field of the Invention

The present invention relates to a method for correcting real-time data such as an audio signal (hereinafter also referred to as an audio signal or audio data) in a Bluetooth module, and to a Bluetooth module. More specifically, the present invention relates to a Bluetooth module that allows real-time data, such as an audio signal, received by the Bluetooth module to be output with a failed portion thereof being corrected for, and to a method for correcting the real-time data in the Bluetooth module.

### 2. Description of the Related Art

A Bluetooth module typically includes a radio frequency (RF) transceiver IC, a baseband IC, and a synchronous connection-oriented (SCO) link for use in an application required for real-time response, such as audio application. When an audio signal is received by the RF transceiver IC of the Bluetooth module, the received audio signal is processed by the baseband IC, and the resulting signal is output to an external codec IC via the SCO link that is a synchronous channel.

The SCO link merely outputs to the codec IC the audio data that is processed and transferred by the baseband IC. Thus, if a missing packet or the like occurs in the audio data, an analog signal output from the codec IC contains noise.

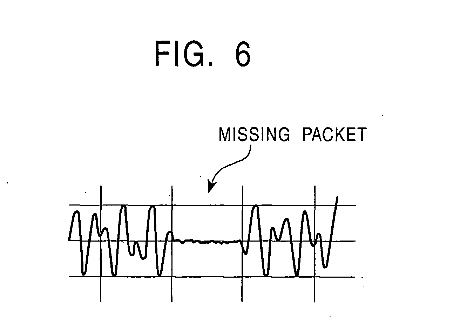

Fig. 6 is a waveform of noise that is contained in an analog signal output from the codec IC due to a missing packet or the like in the audio data.

If a missing packet occurs in the audio signal that is passed from the SCO link to the codec IC, the analog signal output from the codec IC exhibits the waveform shown in Fig. 6 in which the missing packet is considered to be a failed packet. Generally, the level of the analog signal corresponding to this failed portion is zero. The failed portion constitutes noise, which inconveniences the user.

In the related art, one known technique for exchanging an audio signal as packet data is described in, for example, Japanese Unexamined Patent Application Publication No. 2000-134370, and one known Bluetooth module is shown in, for example, Kazuhiro Miyazu, "Bluetooth Guidebook", published by THE NIKKAN KOGYO SHIMBUN, LTD. on September 20, 2000, pp. 68-78.

In the Bluetooth module of the related art described in the publication above, the audio data that is processed and transferred by a baseband IC is merely output from an SCO link to a codec IC. Thus, if a packet fails in the audio data, the analog signal output from the codec IC contains noise.

### SUMMARY OF THE INVENTION

In order to overcome the problem with the related art, it is an object of the present invention to provide a Bluetooth module in which real-time data such as an audio signal (hereinafter referred to as an audio signal or audio data) that is received by an RF transceiver and that is then processed by a baseband IC is output to a codec IC with a detected failed portion of the audio signal being corrected for, and to provide a method for correcting an audio signal in the Bluetooth module.

The foregoing object is achieved by an aspect of the present invention through the provision of a method for correcting real-time data in a Bluetooth module including a synchronous connection-oriented link and a memory, the method including the steps of, while storing received packets of real-time data in the memory, detecting a failed packet that is contained in the received packets; determining the correlation between the data in the packets received before and after the failed packet and the data in two of the packets received before the failed packet with one packet therebetween; obtaining two-packet data having a similarity to the data in the packets received before and after the failed packet; and interpolating the packet data between the obtained two-packet data in place of the data in the failed packet.

The foregoing object is achieved by another aspect of the present invention through the provision of a method for correcting real-time data in a Bluetooth module including a synchronous connection-oriented link and a memory, the method including the steps of, while storing received packets of real-time data in the memory, detecting a failed packet that is contained in the received packets; determining correlation between the data in the packet received immediately before the failed packet and the data in the packets received before the failed packet; obtaining packet data having a similarity to the data in the packet received immediately before the failed packet; and interpolating the data in the packet received immediately after the obtained packet data in place of the data in the failed packet.

The packet data having a similarity may be obtained by determining a product of squares of differences between the data. Alternatively, the packet data having a similarity may be obtained by determining a product of squares of differences between the data and by weighting a portion of the data in the packets before and after the interpolated data depending upon the distance, the portion being close to the interpolated data.

The foregoing object is achieved by another aspect of the present invention through the provision of a Bluetooth module including a synchronous connection-oriented link, a memory, and a signal correcting circuit disposed at the output side of the synchronous connection-oriented link. While received packets of real-time data that are transferred from the synchronous connection-oriented link are stored in the memory, the signal correcting circuit detects a failed packet that is contained in the received packets, and determines the correlation between the data in the packets received before and after the failed packet and the data in two of the packets received before the failed packet with one packet therebetween to obtain two-packet data having a similarity to the data in the packets received before and after the failed packet. The signal correcting circuit interpolates the packet data between the obtained two-packet data in place of the data in the failed packet.

The foregoing object is achieved by another aspect of the present invention through the provision of a Bluetooth module including a synchronous connection-oriented link, a memory, and a signal correcting circuit disposed at the output side of the synchronous connection-oriented link. While received packets of real-time data that are transferred from the synchronous connection-oriented link are stored in the memory, the signal correcting circuit detects a failed packet that is contained in the received packets, and determines the correlation between the data in the packet received immediately before the failed packet and the data in the packets received before the failed packet to obtain packet data having a similarity to the data in the packet received immediately before the failed packet. The signal correcting circuit interpolates the data in the packet received immediately after the obtained packet in place of the data in the failed packet.

In the Bluetooth module, the memory may be an internal memory that is provided in advance in this module for processing Bluetooth data.

According to the present invention, therefore, in the Bluetooth module, when real-time data such as an audio signal is received, a failed packet contained in the real-time data is detected and is corrected for, after which the real-time data is passed to a codec IC.

### BRIEF DESCRIPTION OF THE DRAWINGS

Fig. 1 is a block diagram showing the basic structure of a Bluetooth module according an embodiment of the present invention;
Fig. 2 is a signal waveform for showing a method for correcting an audio signal according to the present invention;
Fig. 3 is a flowchart showing a process performed by a signal correcting circuit;
Fig. 4 is a flowchart showing a data compensation process in the flowchart shown in Fig. 3;
Fig. 5 is a diagram showing the process performed by the signal correcting circuit, in relation to a memory in which data is stored and from which data is output to a codec IC; and
Fig. 6 is a waveform of noise that is contained in an analog signal output from a codec IC due to a missing packet or the like in audio data.

### DESCRIPTION OF THE PREFERRED EMBODIMENTS

A method for correcting an audio signal in a Bluetooth module according to an embodiment of the present invention will now be described in detail with reference to the drawings.

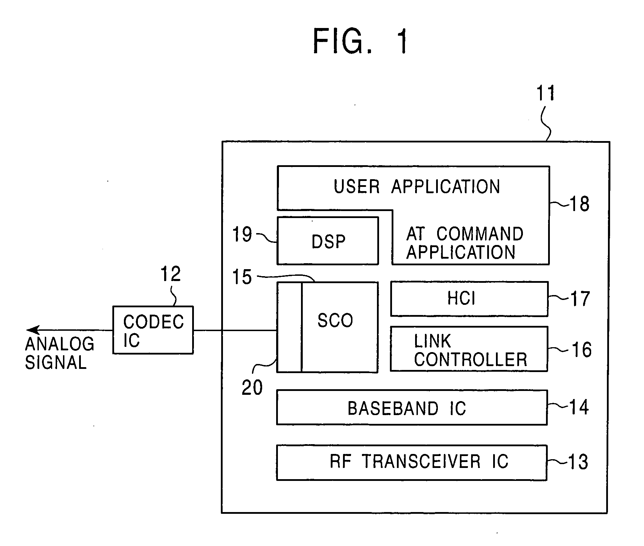

Fig. 1 is a block diagram showing the basic structure of a Bluetooth module 11 according to an embodiment of the present invention. Referring to Fig. 1, the Bluetooth module 11 includes an RF transceiver IC 13, a baseband IC 14, an SCO link 15, a link controller 16, a host controller interface (HCI) 17, an application 18 including a user application and an AT command application, a digital signal processor (DSP) 19, and a signal correcting circuit 20. According to the present invention, the signal correcting circuit 20 is disposed at the output side of the SCO link 15. The signal correcting circuit 20 is connected to a codec IC 12.

The details of the configuration except for the signal correcting circuit 20 are shown in the publication described above or the like, and a description thereof is thus omitted. The signal correcting circuit 20 may be integrated into the SCO link 15, or may be separate from the SCO link 15 in the Bluetooth module 11. Alternatively, the signal correcting circuit 20 and the codec IC 12 may be provided outside the Bluetooth module 11.

According to this embodiment of the present invention, packetized audio data that is sent to the Bluetooth module 11 is received by the RF transceiver IC 13 and is then processed by the baseband IC 14, and the resulting data is input to the SCO link 15. After performing SCO processing on the input audio data, the SCO link 15 passes the resulting data to the signal correcting circuit 20 of the present invention for correction. The audio data corrected by the signal correcting circuit 20 is passed to the codec IC 12.

In the embodiment of the present invention, the signal correcting circuit 20 compensates the data for each failed packet since the data generally fails in units of packets. Each failed packet is compensated for by finding the previously received data that has high correlation with the data in the packets before and after the failed packet and interpolating the data between the found packets in the failed data position. Alternatively, each failed packet is compensated for by finding the previously received data having high correlation with the data in the packet immediately before the failed packet and interpolating the data immediately after the found packets in the failed data position.

The data having such a correlation is found by multiplying the differences from the previous data. The data portions close to the failed packet are weighted, thus reducing the inconsistency at the packet boundary between the interpolated data and the data portions.

Computing a cross-correlation coefficient is a typical method for searching for data having a correlation, i.e., a method for determining whether or not the data in the packets before and after the failed packet or the data in the packet immediately before the failed packet is the same as the data in each of the previously received packets. However, this cross-correlation coefficient computing method requires multiple operations including Fourier transform, inverse Fourier transform, and so forth.

In the present invention, data identity or similarity is determined by multiplying the squares of differences between data, thus eliminating the need for multiple operations including Fourier transform, inverse Fourier transform, and so forth.

In order to increase the significance of the data that is close to the data in the failed packet, in determining the differences, weighting is performed by adding a value or shifting depending upon the distance.

This leads to less error at the boundary between the failed packet and other packets if the received data does not contain the same value.

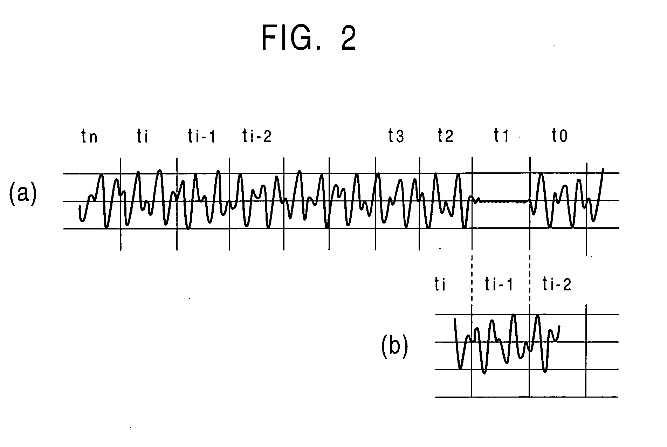

The overview of a method for correcting an audio signal according to the present invention will now be described with reference to Fig. 2.

As shown in (a) of Fig. 2, it is assumed that packets are sequentially sent at tₙ, tₙ₋₁, ..., t₂, t₁, and t₀, where t₀ is the latest time, and the packet sent at t₁ fails. In a method of the related art, the SCO link 15 transfers the audio data including the failed packet to the codec IC 12, and the decoded data exhibits the waveform shown in (a) of Fig. 2 in which the level of the signal waveform at t₁ is zero, as described above with reference to Fig. 6, which constitutes noise. This noise is output from the codec IC 12.

In order to prevent the occurrence of such noise, according to the embodiment of the present invention, the signal correcting circuit 20 that compensates for the failed packet data is disposed on the output side of the SCO link 15 and on the input side of the codec IC 12. If a packet fails at t₁, as shown in (b) of Fig. 2, the signal correcting circuit 20 compares the signal waveforms of the packets received at t₂ and t₀ before and after the failed packet received at t₁ with the signal waveforms of two packets received before the packet received at t₂ with one packet therebetween, for example, the packets received at tᵢ and tᵢ₋₂.

In this comparison, previous signal waveforms are compared while sequentially shifting, and the squares of differences between the data are multiplied to determine data identity or similarity. If the same or similar signal waveform is found as a result of comparison, the signal correcting circuit 20 interpolates the signal waveform of the packet between the found packets as corrected data for the failed packet received at t₁ in place of the failed packet data, and transfers the data including such interpolation to the codec IC 12.

The signal correcting circuit 20 weights data portions in the packets before and after the packet between which the data is interpolated, which are close to the interpolated data, depending upon the distance. This leads to less inconsistency at the boundary between the interpolated data and the previous and subsequent packets.

In the embodiment of the present invention, as described above, the audio data in the failed packet is corrected for using the data the same as or similar to this audio data that is found from the previously received data. The previously received packet data is stored using a buffer memory. This buffer memory may be contained in the signal correcting circuit 20. Alternatively, depending upon the configuration of the Bluetooth module 11, an internal memory that is provided in advance in the baseband IC 14 or the SCO link 15 may be used.

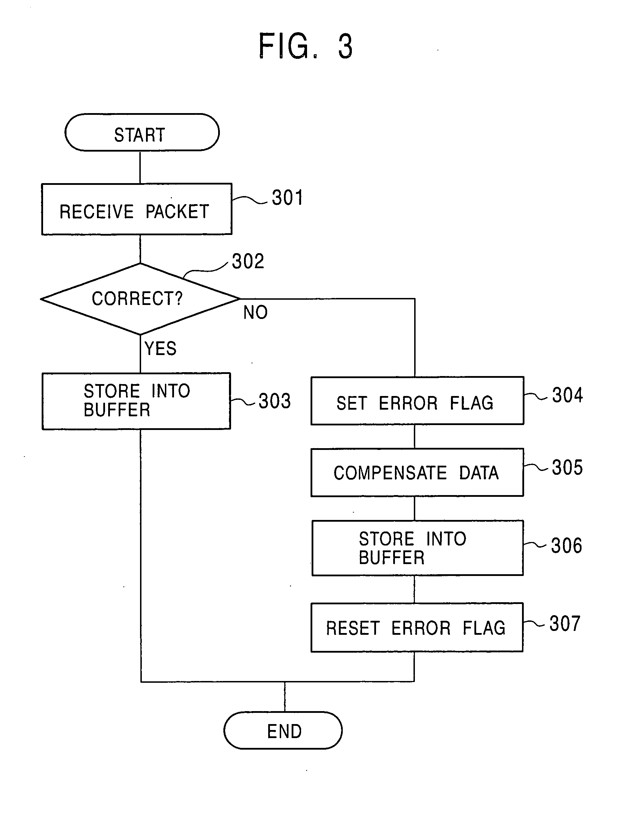

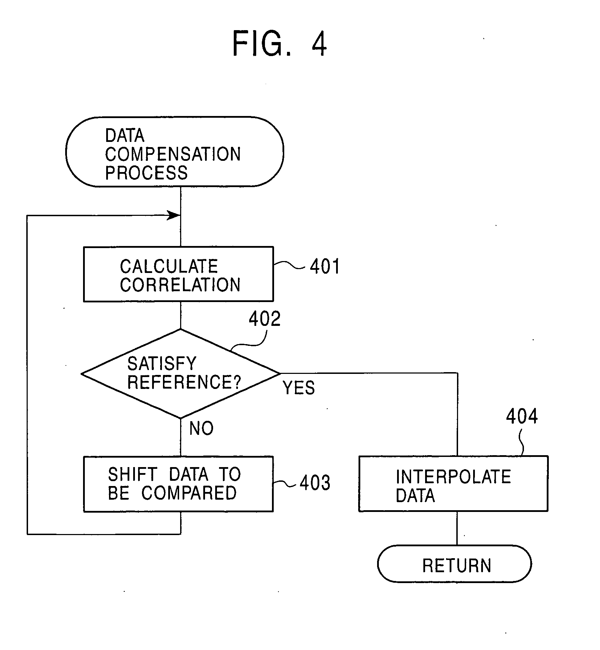

Fig. 3 is a flowchart showing a process performed by the signal correcting circuit 20. Fig. 4 is a flowchart showing a data compensation process in the flowchart shown in Fig. 3. The processes shown in Figs. 3 and 4 are performed for each of the packets sequentially transferred from the SCO link 15 to the signal correcting circuit 20, and the series of processes terminates before the subsequent packet is transferred.

Referring to Fig. 3, the signal correcting circuit 20 receives a packet from the SCO link 15 in step 301, and determines in step 302 whether or not the received packet is correct. This determination may be performed by determining whether or not a silent portion continues due to failed data in the packet or by determining whether or not a failed packet has been reported from the SCO link 15.

If it is determined in step 302 that the received packet is correct, then in step 303, the data in the received packet is stored in a buffer memory. Then, the process ends.

If it is determined in step 302 that the received packet is not correct and is a failed packet, then in step 304, an error flag is set to the failed packet. In step 305, a data compensation process is performed, as shown in detail in Fig. 4.

After the data compensation process in step 305, the compensated data is stored in the buffer memory in step 306. In step 307, the error flag is reset. Then, the process ends.

When the data compensation process starts in step 305, referring to Fig. 4, in step 401, correlation calculation is performed. As described above with reference to Fig. 2, in the correlation calculation, the signal waveforms of the data in the packets received before and after the failed packet are compared with the signal waveforms of the data in two packets received before the failed packet with one packet therebetween, and the squares of the differences between the respective data are multiplied.

As a result of correlation calculation in step 401, it is determined in step 402 whether or not a match is found between the data or a certain similarity reference is satisfied. If the reference is not satisfied, the set of previous data to be compared is shifted by one in step 403. Then, the process returned to step 401, in which the set of shifted data is subjected to data compensation process.

If it is determined in step 402 that the reference is satisfied, then in step 404, the data in the packet between the two previous packets compared is interpolated in place of the data in the failed packet. Then, the process is returned to the processing of step 306.

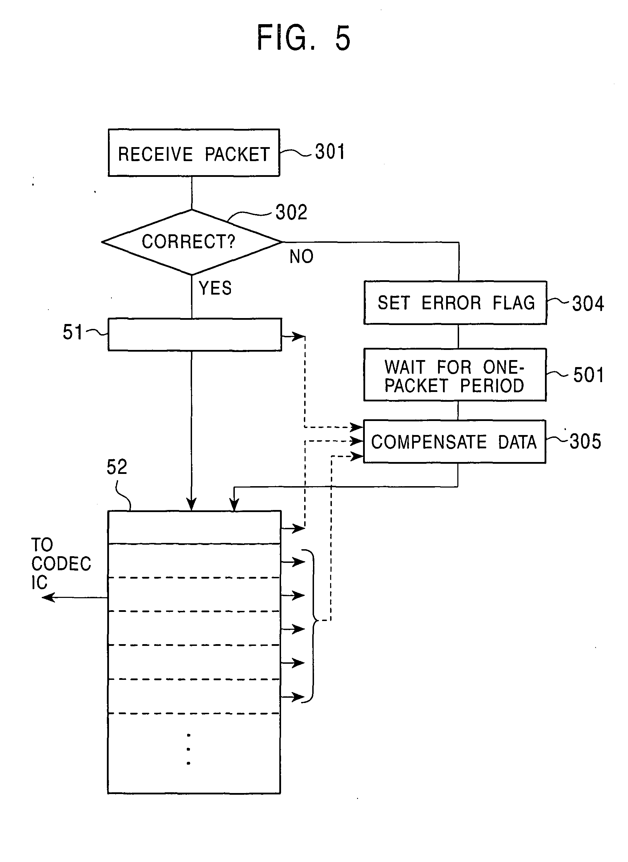

Fig. 5 is a diagram showing the process performed by the signal correcting circuit 20, in relation to a memory, including first and second buffer memories 51 and 52, in which data is stored and from which data is output to the codec IC 12.

In the embodiment of the present invention, as described above, a failed packet is compensated for by comparing the signal waveforms of the data in the packets received before and after the failed packet with the signal waveforms of the data in two of the packets received before the failed packet with one packet therebetween. Thus, the compensation process is performed when the packet subsequent to the failed packet reaches. The compensated data and the data in the packet subsequent to the failed packet are stored in a buffer memory.

In the embodiment of the present invention, as shown in Fig. 5, this buffer memory is formed of the first buffer memory 51 that stores one packet of serially connected data, and the second buffer memory 52 that stores a plurality of packets of data. The second buffer memory 52 is controlled so as to receive either the packet data from the first buffer memory 51 or the compensated data and to store packets in turn. Moreover, the second buffer memory 52 is designed so as to read data at any buffer position while storing data.

In Fig. 5, if it is determined in step 302 shown in Fig. 3 that the received packet is correct, the data in this packet is stored in the first buffer memory 51. It is assumed that it is determined that the subsequent packet is not correct. The packet received one packet before the incorrect packet is transferred from the first buffer memory 51 to the second buffer memory 52. An error flag is set for the data of the incorrect packet in step 304 shown in Fig. 3, and this data is compensated for in step 305 shown in Fig. 3. The process system waits for one-packet period (step 501) until a correct packet after the incorrect packet is stored in the first buffer memory 51, and then the data compensation process is performed in step 305 shown in Fig. 3.

The data compensation process is performed in the manner described above in detail with reference to Fig. 4 using the data in the correct packet subsequent to the incorrect packet, which is stored in the first buffer memory 51, the data in the correct packet received one packet before the incorrect packet, which is stored in the top stage of the second buffer memory 52, and the data in the previously received packets that are stored in the second and following stages of the second buffer memory 52. The compensated data is stored in the top stage of the second buffer memory 52. Then, the data in the correct packet subsequent to the incorrect packet, which is stored in the first buffer memory 51, is transferred to the second buffer memory 52 for storage. As a result, the correct packet data or the compensated and now correct packet data are stored in the second buffer memory 52 according to the receiving order.

The packet data from an appropriately set inter-stage position of the second buffer memory 52 is output to the codec IC 12. In order to reduce the time delay with respect to the transmitter as much as possible, desirably, the inter-stage position of the second buffer memory 52 from which the data is output to the codec IC 12 is as high as possible, for example, the second or third stage. The packet data stored in the second buffer memory 52 is used for compensation for an incorrect packet, and, therefore, the second buffer memory 52 is preferably capable of storing multiple packets. However, a larger memory capacity is required for storing more packets. Thus, the memory capacity of the second buffer memory 52 is defined as required.

In the foregoing embodiment of the present invention, a failed packet is compensated for by comparing the data in packets received before and after the failed packet with the data in two of the previously received packets with one packet therebetween, obtaining the previously received data that have high correlation with the data in the packets received before and after the failed packet, and interpolating the data between the obtained data in the failed data position. However, the present invention is not limited to this embodiment. For example, the data that has high correlation with the data in the packet immediately before the failed packet may be obtained from the previously received packet data, and the data in the packet immediately after the obtained packet may be used as data for compensation.

In the foregoing embodiment of the present invention, as shown in Fig. 2, unlike the related art, the signal waveform of a failed packet that is converted into an analog signal by the codec IC 12 does not exhibit the zero level, but is compensated for by finding the previously received data that has high correlation with the data in the packets before and after the failed packet and interpolating the data between the found data in the failed data position; or is compensated for by finding the previously received data that has high correlation with the data in the packet immediately before the failed packet and interpolating the data immediately after the found data in the failed data position. Thus, the data in the failed packet is compensated for so that the audio data in the packets before and after the failed packet can be smoothly concatenated in analog signal form, which helps a user listen to noiseless or distortionless sound.

In the foregoing embodiment of the present invention, a failure in audio data is corrected for. However, the present invention is not limited to the audio data, and may embrace correction of other real-time data required for real-time response, such as video data.

## Claims

1. A method for correcting real-time data in a Bluetooth module including a synchronous connection-oriented link and a memory, said method comprising the steps of:
while storing received packets of real-time data in the memory, detecting a failed packet that is contained in the received packets;
determining the correlation between the data in the packets received before and after the failed packet and the data in two of the packets received before the failed packet with one packet therebetween;
obtaining two-packet data having a similarity to the data in the packets received before and after the failed packet; and
interpolating the packet data between the obtained two-packet data in place of the data in the failed packet.

2. A method for correcting real-time data in a Bluetooth module including a synchronous connection-oriented link and a memory, said method comprising the steps of:
while storing received packets of real-time data in the memory, detecting a failed packet that is contained in the received packets;
determining correlation between the data in the packet received immediately before the failed packet and the data in the packets received before the failed packet;
obtaining packet data having a similarity to the data in the packet received immediately before the failed packet; and
interpolating the data in the packet received immediately after the obtained packet data in place of the data in the failed packet.

3. A method of correcting real-time data according to claim 1, wherein the packet data having a similarity is obtained by determining a product of squares of differences between the data.

4. A method of correcting real-time data according to claim 2, wherein the packet data having a similarity is obtained by determining a product of squares of differences between the data.

5. A method of correcting real-time data according to claim 1, wherein the packet data having a similarity is obtained by determining a product of squares of differences between the data, and by weighting a portion of the data in the packets before and after the interpolated data depending upon the distance, the portion being close to the interpolated data.

6. A method of correcting real-time data according to claim 2, wherein the packet data having a similarity is obtained by determining a product of squares of differences between the data, and by weighting a portion of the data in the packets before and after the interpolated data depending upon the distance, the portion being close to the interpolated data.

7. A Bluetooth module comprising:
a synchronous connection-oriented link;
a memory; and
a signal correcting circuit disposed at the output side of the synchronous connection-oriented link, for, while received packets of real-time data that are transferred from the synchronous connection-oriented link are stored in the memory, detecting a failed packet that is contained in the received packets, determining the correlation between the data in the packets received before and after the failed packet and the data in two of the packets received before the failed packet with one packet therebetween to obtain two-packet data having a similarity to the data in the packets received before and after the failed packet, and interpolating the packet data between the obtained two-packet data in place of the data in the failed packet.

8. A Bluetooth module comprising:
a synchronous connection-oriented link;
a memory; and
a signal correcting circuit disposed at the output side of the synchronous connection-oriented link, for, while received packets of real-time data that are transferred from the synchronous connection-oriented link are stored in the memory, detecting a failed packet that is contained in the received packets, determining the correlation between the data in the packet received immediately before the failed packet and the data in the packets received before the failed packet to obtain packet data having a similarity to the data in the packet received immediately before the failed packet, and interpolating the data in the packet received immediately after the obtained packet in place of the data in the failed packet.

9. A Bluetooth module according to claim 7, wherein the memory comprises an internal memory that is provided in advance in the module for processing Bluetooth data.

10. A Bluetooth module according to claim 8, wherein the memory comprises an internal memory that is provided in advance in the module for processing Bluetooth data.
